# EUROPÄISCHE PATENTSCHRIFT

(11) **EP 0 779 947 B1**
(45) Veröffentlichungstag und Bekanntmachung des Hinweises auf die Patenterteilung: **23.05.2001**
(21) Anmeldenummer: 96902893.5
(22) Anmeldetag: 23.02.1996
(51) Int. Cl.: F02M 37/10, F16F 1/37, F16F 15/04

(54) **VORRICHTUNG ZUR AUFNAHME EINES KRAFTSTOFFÖRDERAGGREGATS INNERHALB EINES KRAFTSTOFFBEHÄLTERS**
DEVICE FOR MOUNTING A FUEL FEEDING UNIT INSIDE A FUEL TANK
DISPOSITIF DE MONTAGE D'UN ORGANE D'AMENEE DE CARBURANT A L'INTERIEUR D'UN RESERVOIR DE CARBURANT

(30) Priorität: 29.06.1995 DE 19523634
(43) Veröffentlichungstag der Anmeldung: 25.06.1997
(73) Patentinhaber: ROBERT BOSCH GMBH, 70442 Stuttgart (DE)
(72) Erfinder: FRANK, Kurt, D-73614 Schorndorf (DE); WÜRL, Wolfgang, D-74343 Sachsenheim (DE)
(86) Internationale Anmeldenummer: DE9600302
(87) Internationale Veröffentlichungsnummer: WO9701704

(56) Entgegenhaltungen:
- EP-A- 0 372 718
- DE-C- 3 912 773
- US-A- 4 178 955
- US-A- 4 306 844
- US-A- 4 591 319
- US-A- 4 780 063

## Beschreibung

### Stand der Technik

Die Erfindung betrifft eine Vorrichtung zur Aufnahme eines Kraftstofförderaggregats innerhalb eines Kraftstoffbehälters nach der Gattung des Hauptanspruchs.

Zur geräuschgedämpften Installation eines Kraftstofförderaggregats innerhalb eines Kraftstoffbehälters wurde dieses bisher in einem aus Gummi oder aus kraftstoffesten Kunststoff bestehenden Dämpfungselement aufgenommen, das behälterseitig in geeigneter Weise verankert war. Diese aus Gummi bestehenden und in Kraftstoff liegenden Dämpfungselemente härten jedoch aus. Alternative Werkstoffe wie beispielsweise Kunststoffe quellen in Kraftstoff stark auf. In beiden Fällen konnten sich deshalb mit der Zeit Geräuschbrücken aufbauen.

Aus der DE-PS 39 12 773 ist eine Förderaggregathalterung bekannt, bei der Dämpfungselemente aus Fließ-, Netz-, Gitter- oder Zellstrukturen vorgesehen sind, die ihre Elastizität beibehalten. Die Elastizität dieser Dämpfungselemente wird somit nicht durch die elastomeren Materialeigenschaften bestimmt, sondern dadurch, daß dieses Material in eine geeignete elastisch nachgiebige Struktur gebracht ist. Das Kraftstofförderaggregat ist über Rohrschellen mit den Dämpfungselementen verbunden, die wiederum mit dem Kraftstoffbehälter in Verbindung stehen. Eine derartige Installation eines Kraftstofförderaggregats weist eine Vielzahl von mechanischen Verbindungen und eine aufwendige Verbindungstechnik zur Aufnahme und Festlegung des Kraftstofförderaggregats zu dem Kraftstoffbehälter auf.

Durch die US-A-4306844 ist eine Vorrichtung gemäß dem Oberbegriff des Anspruchs 1 bekannt. Diese Vorrichtung dient zur Aufnahme eine Kraftstofförderaggregats innerhalb eines Kraftstoffbehälters eines Kraftfahrzeugs. Die Vorrichtung weist ein das Kraftstofförderaggregat im wesentlichen vollständig umgebendes Dämpfungselement auf, das über eine an diesem angreifende Haltevorrichtung im Kraftstoffbehälter angeordnet ist. Das Dämpfungselement soll aus einem kraftstoffbeständigen, elastischen Material bestehen, so dass hier dieselben Probleme hinsichtlich der Verhärtung und/oder des Aufquellens bestehen wie vorstehend erläutert.

Auch durch die US-A-4591319 ist eine Vorrichtung gemäß dem Oberbegriff des Anspruchs 1 bekannt. Die Vorrichtung dient zur Aufnahme eine Kraftstofförderaggregats innerhalb eines Kraftstoffbehälters eines Kraftfahrzeugs und weist ein das Kraftstofförderaggregat im wesentlichen vollständig umgebendes Dämpfungselement auf, das über eine an diesem angreifende Haltevorrichtung im Kraftstoffbehälter angeordnet ist. Das Dämpfungselement besteht aus Gummi, so dass auch hier das Problem einer Verhärtung besteht.

Die erfindungsgemäße Vorrichtung mit den Merkmalen gemäß Anspruch 1 hat demgegenüber den Vorteil, dass eine sichere Aufnahme und definierte Lage des Kraftstofförderaggregats im Dämpfungselement gegeben ist und beim Dämpfungselement keine Probleme hinsichtlich einer Verhärtung und/oder eines Aufquellens bestehen.

Der Schaumkörper kann einseitig offen ausgebildet sein, so daß das Kraftstofförderaggregat darin einsetzbar und durch die Haltevorrichtung verschließbar ist, wobei die Haltevorrichtung form- und/oder kraftschlüssig an der offenen Seite des Schaumkörpers anbringbar ist.

Eine weitere vorteilhafte Ausbildung des Dämpfungselements ist die Verwendung eines offenporigen Schaumkörpers. Dadurch kann eine geeignete, elastisch nachgiebige Struktur geschaffen werden, bei der über längere Zeiträume unverändert eine Geräuschabkopplung erhalten bleiben kann. Es kann alternativ auch vorgesehen sein, daß auch geschlossen oder gemischtzellig ausgebildete Dämpfungselemente zweckmäßigerweise zum Einsatz kommen. Ferner kann vorgesehen sein, daß der Schaumkörper zumindest teilweise eine Gitterstruktur aus Metallfasern oder dünnen Metalldrähten aufweist, die den Schaumkörper zumindest teilweise versteifen können.

Nach einer weiteren vorteilhaften Ausführungsform der Vorrichtung ist vorgesehen, daß die Dämpfungselemente zwei- oder mehrteilig ausgebildet sind. Dadurch können vorgeformte oder bereits ausgeschäumte Halbschalen oder Formteile ausgebildet sein, die in einfacher Weise bei der Montage zu einem Dämpfungselement zusammengesetzt werden können.

Diese vorteilhafterweise zwei- oder mehrteilig ausgebildeten Dämpfungselemente können sowohl eine radial als auch axial verlaufende Trennebene aufweisen. Insbesondere ist ein aus zwei Halbschalen mit einer axial verlaufenden Trennebene ausgebildetes Dämpfungselement für die einfache Montage von Vorteil. Hierbei können in die eine Halbschale beispielsweise das vormontierte Kraftstofförderaggregat mit daran angeordnetem Vorsieb als auch den elektrischen Verbindungsleitungen und einer Verbindungsleitung zu der Vorlaufleitung eingelegt werden und die zweite Halbschale des Dämpfungselementes einfach zu einem Dämpfungselement zusammengeführt werden.

Eine weitere vorteilhafte Ausführungsform der Vorrichtung sieht an den zwei oder mehrteiligen Dämpfungselemente jeweils einander gegenüberliegende Rast- oder Schnappelemente vor, so daß ohne Verwendung von weiteren Verbindungsmitteln die zwei- oder mehrteiligen Dämpfungselemente einfach und schnell fest zueinander angeordnet werden können.

Eine weitere vorteilhafte Ausführungsform der Erfindung liegt in der Befestigung des Dämpfungselementes durch zumindest ein an der Haltevorrichtung angeordnetes Befestigungselement, das an einer in dem Kraftstoffbehälter angeformten Aufnahme angeordnet ist. Das Befestigungselement kann als Lasche oder umlaufender radial nach außen weisender Abschnitt oder dgl. ausgebildet sein. Das Dämpfungselement kann über eine Stirnseite zu der Haltevorrichtung festlegbar sein. Somit kann die Haltevorrichtung fest zu dem Kraftstofftank angeordnet sein und die Geräuschentkopplung durch das das Kraftstofförderaggregat aufnehmende Dämpfungselement zu dem Halteflansch ermöglicht sein.

Eine weitere vorteilhafte Ausführungsform der Vorrichtung ist die Ausbildung der Haltevorrichtung mit definiert ausgebildeten Anschlußstücken, wie beispielsweise einer elektrischen Verbindungsstelle, einem daran angeformten Anschlußstück, das sowohl die Verbindung der Kraftstoffleitung zum Motor als auch die Verbindung zu dem Kraftstofförderaggregat ermöglicht und ggf. einen Anschlußstutzen für eine Rücklaufleitung aufweist, sofern der Einsatz einer derartigen Vorrichtung für ein System mit Motordurchspülung mittels Kraftstoff Einsatz findet. Ferner weist die Haltevorrichtung einen umlaufenden Bund auf, der das Dämpfungselement zumindest stirnseitig vollständig umgreifen und aufnehmen und somit zu der Haltevorrichtung festlegen kann.

Nach einer weiteren vorteilhaften Ausgestaltung der Erfindung ist vorgesehen, daß das Dämpfungselement zumindest teilweise von einer Hülse umgeben ist, die zu der Haltevorrichtung beabstandet ist. Die Hülse umgibt, zumindest in axialer Richtung gesehen, vollständig das Vorsieb und erstreckt sich zumindest teilweise entlang der Kraftstofförderaggregat. Die Anordnung der Hülse an dem Dämpfungselement ist insbesondere bei einem stehenden oder winkligen Einbau des Kraftstofförderaggregats in dem Kraftstoffbehälter von Vorteil. Dadurch kann ein Wegschwappen des Kraftstoffes bei fast entleertem Tank, beispielsweise in Kurvenfahrten oder bei großen Steig- oder Gefällstrecken verhindert werden. Der offenporige Schaumkörper kann aufgrund seiner Ausgestaltung eine Schwammwirkung aufweisen und Kraftstoff aufnehmen, so daß über eine gewisse Zeitdauer das Kraftstofförderaggregat selbst bei derartigen Extremsituationen mit Kraftstoff versorgt werden kann.

### Zeichnung

Ein bevorzugtes Ausführungsbeispiel der Erfindung ist in der Zeichnung dargestellt und in der nachfolgenden Beschreibung näher erläutert. Es zeigen:
- Fig. 1: eine schematische Schnittdarstellung einer erfindungsgemäßen Vorrichtung,
- Fig. 2: eine schematische Ansicht eines zweiteiligen Dämpfungselementes mit einer axialen und radialen (strichliniert) Trennebene und
- Fig. 3: eine schematische Schnittdarstellung einer weiteren vorteilhaften Ausführungsform der erfindungsgemäßen Vorrichtung.

### Ausführungsbeispiel

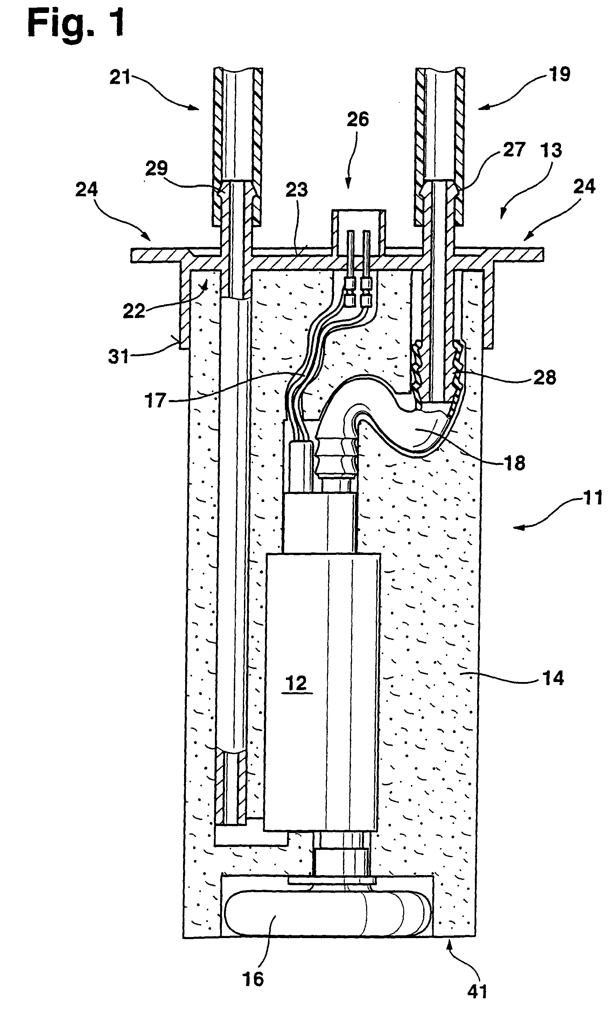

Fig. 1 zeigt eine Vorrichtung 11 für ein innerhalb eines Kraftstofftanks zu installierendes Kraftstofförderaggregat 12, das am Boden (nicht dargestellt) des Kraftstoffbehälters in geeigneter Weise befestigt ist. Das Kraftstofförderaggregat 12 umfaßt eine Förderpumpe und einen Antieb für die Förderpumpe, die in einem gemeinsamen Gehäuse angeordnet sind. Beispielsweise kann die Vorrichtung 11 in einem aus Kunststoff zu fertigenden Kraftstofftank in vorgeformte Aufnahmen angeordnet werden. Das Kraftstofförderaggregat 12 kann nahe dem Behälterboden in stehender oder liegender als auch in einer unter einem beliebigen Winkel vorgesehenen Schräglage angeordnet sein.

Die Vorrichtung 11 besteht aus einer Haltevorrichtung 13, die die Vorrichtung 11 zu dem Kraftstoffbehälter festlegt und aus einem an der Haltevorrichtung 13 angeordneten Dämpfungselement 14. Das Dämpfungselement 14 weist eine zylindrische Form auf und ist als offenporiger Schaumkörper ausgebildet. Es ist selbstverständlich, daß das Dämpfungselement 14 weitere von der zylindrischen Form abweichende Ausbildungen aufweisen kann. Der Schaumkörper kann ebenso geschlossenzellig oder gemischtzellig ausgebildet sein. Ferner kann der offenzellige Schaumkörper eine geschlossene Außenhaut aufweisen. Der Schaumkörper ist aus bereits bekanntem Schaummaterial ausgebildet, das seine elastische und nachgiebige Struktur unter Einfluß von Kraftstoff über eine lange Zeitdauer beibehält.

In dem Dämpfungselement 14 sind Aussparungen für das Kraftstofförderaggregat 12 und einem damit in Verbindung stehenden Vorsieb 16 als auch für elektrische Verbindungsleitungen 17 und einem vom Kraftstofförderaggregat 12 wegführenden Verbindungsstück 18 zu einer Vorlaufleitung 19 vorgesehen. Diese Aussparungen in dem Dämpfungselement 14 sind derart ausgebildet, daß zumindest das Kraftstofförderaggregat 12 formschlüssig umgeben ist.

In Abhängigkeit des Anwendungsfalles kann, wie beispielhaft in Fig. 1 dargestellt ist, eine Aussparung für eine Rücklaufleitung 21 vorgesehen sein, wie sie in konventionellen Systemen für eine Motordurchspülung erforderlich ist. Diese Rücklaufleitung 21 kann anwendungsspezifisch auch entfallen.

Durch die Ausbildung des Schaumkörpers als Dämpfungselement 14 sind keine weiteren Verbindungstechniken als auch Geräuschabkoppelelemente aus Gummi oder Kunststoff oder dgl. erforderlich, die nach einem kürzeren Zeitraum zu Geräuschbrücken führen würden.

An einer dem Vorsieb 16 gegenüberliegenden Stirnseite 22 des Dämpfungselementes 14 ist die Haltevorrichtung 13 angeordnet, die als Flansch ausgebildet ist. Diese weist einen scheibenförmigen Grundkörper 23 auf, an dem seitlich nach außen ragende Befestigungselemente 24 angeformt sind. In Abhängigkeit der Ausgestaltung des Kraftstoffbehälters können die Befestigungselemente 24 in bekannter Weise angepaßt sein und beispielsweise über eine Schraub-, Rast-, Schnapp-, Klemmverbindung oder dgl. zu dem Kraftstoffbehälter festgelegt werden. Am scheibenförmigen Grundkörper 23 ist eine elektrische Verbindungsstelle 26 vorgesehen, an die eine elektrische Verbindungsleitung 17 zur Steuerung das Kraftstofförderaggregat 12 anschließbar ist. Ferner ist ein von dem Dämpfungselement 14 wegweisender Anschlußstutzen 27 vorgesehen, an dem die Vorlaufleitung 19 aufsteckbar ist. Der Anschlußstutzen 27 weist ein diesem gegenüberliegenden und in das Dämpfungselement 14 hineinragendes Anschlußstück 28 auf, an dem das am Kraftstofförderaggregat 12 aufgesteckte Verbindungsstück 18 anbringbar ist. Desweiteren ist ein Anschlußstutzen 29 für die Rücklaufleitung 21 ausgebildet. Dieser Anschlußstutzen 29 kann in seiner Länge derart ausgebildet sein, daß er bis zu einer Ansaugseite des Kraftstofförderaggregats 12 sich erstreckt. Alternativ kann der Anschlußstutzen 29 gleich wie der Anschlußstutzen 27 ausgebildet sein, wobei ebenso ein Verbindungsstück 18, vorzugsweise ein Benzinschlauch, in dem Dämpfungselement 14 angeordnet werden kann, das zu der Ansaugseite des Kraftstofförderaggregats 12 führt.

An dem scheibenförmigen Grundkörper 23 ist ein umlaufender Bund 31 angeformt, der das zylindrische Dämpfungselement 14 wenigstens teilweise umgibt und zu dem scheibenförmigen Grundkörper 23 festlegt. Um eine zusätzliche Sicherheit für den Einbau einer derartigen Vorrichtung 11 zu gewährleisten, kann ein an der Stirnseite 22 des Dämpfungselementes 14 gegenüberliegenden Stirnseite 41 angeordnetes Halteelement im Kaftstoffbehälter vorgesehen sein, das beispielsweise in dem Kraftstoffbehälter vorgeformt ist.

Die Haltevorrichtung 13 ist vorteilhafterweise aus einem für den Einsatz in Kraftstoffbehältern geeigneten Kunststoff ausgebildet, wie beispielsweise POM. Ebenso kann eine aus Metall oder Nichtmetall ausgebildete Haltevorrichtung 13 vorgesehen sein, die ggfs. eine Kunststoffbeschichtung aufweist.

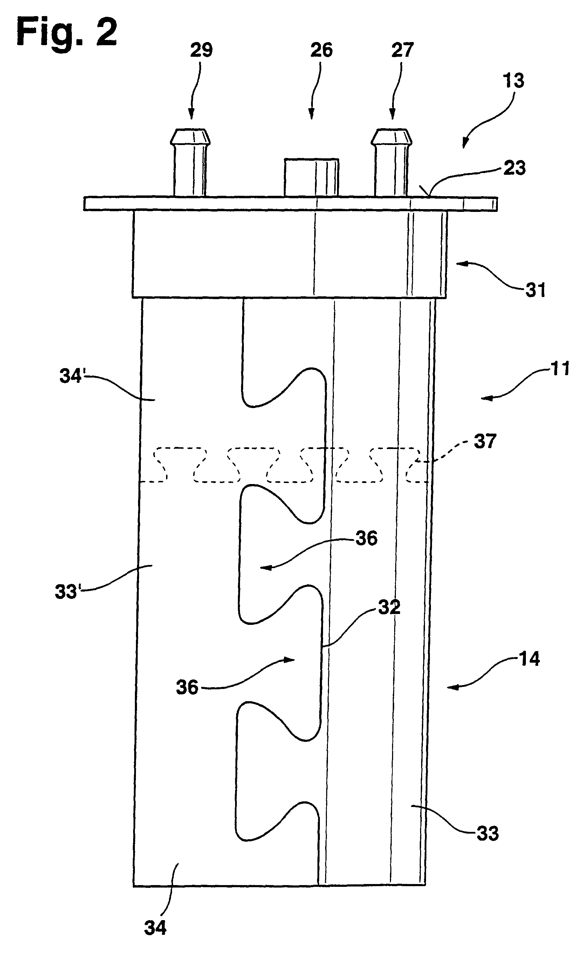

In Fig. 2 ist die Vorrichtung 11 mit einem Dämpfungselement 14 dargestellt, das eine in axialer Richtung sich erstreckende Trennebene 32 aufweist. Das zweiteilige Dämpfungselement 14 besteht aus zwei vorgeformten bzw. vorgeschäumten Halbschalen 33, 34, die nach dem Einlegen des Kraftstofförderaggregats 12 mit dem Vorsieb 16 und den elektrischen Verbindungsleitungen 17 als auch dem Zwischenstück 18 und ggfs. der Rücklaufleitung 21 auf einfache Weise zusammengesetzt werden. An den Halbschalen 33, 34 sind jeweils einander gegenüberliegende Rastelemente 36 in der Trennebene 32 angeordnet, über die die Halbschalen 33, 34 zueinander festgelegt sind.

Alternativ kann auch eine sich radial erstreckende Trennebene 37 (strichliniert) vorgesehen sein, wobei die Halbschalen 33', 34' die selben Merkmale wie die oben beschriebenen Halbschalen 33, 34 aufweisen können. Ebenso kann das Dämpfungselement 14 aus mehreren Teilen bestehen, wobei vorteilhafterweise die mehrteilige Ausführungsform ebenso aus symmetrisch gestalteten Teilen ausgebildet ist und vorteilhafterweise Rastelemente aufweist, so daß eine einfache Herstellung und Montage erhalten bleibt.

Eine weitere alternative Ausführungsform des Dämpfungselementes 14 kann darin bestehen, daß das Kraftstofförderaggregat 12 mit dem Vorsieb 16 an der Haltevorrichtung 13 vormontiert sind und das Dämpfungselement 14 an die Haltevorrichtung 13 angeschäumt wird.

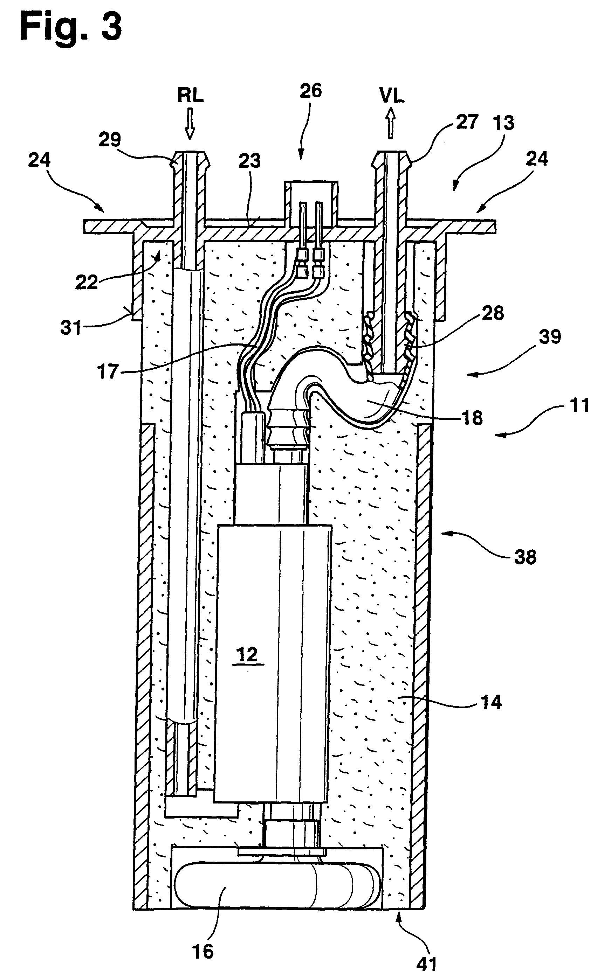

In Fig. 3 ist eine weitere alternative Ausführungsform der Vorrichtung 11 dargestellt. Das Dämpfungselement 14 ist von einer Hülse 38 umgeben, die beispielsweise aus Kunststoff oder dgl. als einfaches Spritzgußteil hergestellt sein kann. Die Hülse 38 erstreckt sich zumindest teilweise von einer der Stirnseite 22 gegenüberliegenden Stirnseite 41 des Dämpfungselementes 14 in Richtung auf die Haltevorrichtung 13. Zwischen dem Bund 31 und der Hülse 38 ist ein Freiraum 39 vorgesehen, so daß über diesen Freiraum 39 Kraftstoff in das Dämpfungselement 14 gelangen kann, das durch die schwammartige Ausbildung Kraftstoff aufnehmen kann. Diese Ausführungsform ist insbesondere bei einer stehenden Anordnung der Vorrichtung 11 von Vorteil, da insbesondere bei Kurvenfahrten oder dgl. ein Wegschwappen des Kraftstoffes vermieden werden kann, der aufgrund der Hülse 38 in dem Dämpfungselement 14 zurückgehalten werden kann. Die Hülse 38 kann zusätzlich das Dämpfungselement 14 versteifen und zu dem Kraftstofftank befestigbar sein. Ebenso kann die Hülse 38 an unterschiedliche geometrische Ausgestaltungen des Dämpfungselementes 14 angepaßt sein.

## Patentansprüche

1. Vorrichtung zur Aufnahme eines Kraftstofförderaggregats innerhalb eines Kraftstoffbehälters, insbesondere von Kraftfahrzeugen, mit wenigstens einem das Kraftstofförderaggregat (12) im wesentlichen vollständig umgebenden Dämpfungselement (14), das mit einer am Dämpfungselement (14) angreifenden Haltevorrichtung (13) in dem Kraftstoffbehälter angeordnet ist, dadurch gekennzeichnet, dass das Dämpfungselement (14) als ein Schaumkörper ausgebildet ist, der zumindest das Kraftstoffförderaggregat (12) formschlüssig umgibt.

2. Vorrichtung nach Anspruch 1, dadurch gekennzeichnet, daß das Dämpfungselement (14) als offenporiger Schaumkörper ausgebildet ist.

3. Vorrichtung nach einem der vorhergehenden Ansprüche, dadurch gekennzeichnet, daß das Dämpfungselement (14) zwei- oder mehrteilig ausgebildet ist und zur Aufnahme des Kraftstoffförderaggregats (12) und/oder der elektrischen Verbindungsleitungen (17) und/oder zumindest für ein Verbindungsstück (18) einer Vorlaufleitung (19) und/oder ein Vorsieb (16) des Kraftstofförderaggregats (12) Aussparungen aufweist.

4. Vorrichtung nach Anspruch 3, dadurch gekennzeichnet, daß das zwei- oder mehrteilige Dämpfungselement (14) eine axial zu einer Längsachse des Kraftstofförderaggregats (12) verlaufende Trennebene (32) aufweist.

5. Vorrichtung nach einem der Ansprüche 1 bis 3, dadurch gekennzeichnet, daß das zwei- oder mehrteilige Dämpfungselement (14) eine radial zu einer Längsachse des Kraftstofförderaggregats (12) verlaufende Trennebene (37) aufweist.

6. Vorrichtung nach einem der Ansprüche 3 bis 5, dadurch gekennzeichnet, daß das zwei- oder mehrteilige Dämpfungselement (14) in der Trennebene (32, 37) liegende Rastelemente (36) aufweist.

7. Vorrichtung nach einem der vorhergehenden Ansprüche, dadurch gekennzeichnet, daß an wenigstens einer Stirnseite (22) des im wesentlichen zylindrisch ausgebildeten Dämpfungselementes (14) die Haltevorrichtung (13) angeordnet ist und wenigstens ein Befestigungselement (24) zur Befestigung in dem Kraftstoffbehälter aufweist.

8. Vorrichtung nach einem der vorhergehenden Ansprüche, dadurch gekennzeichnet, daß die Haltevorrichtung (13) wenigstens eine elektrische Verbindungsstelle (26), ein mit der Vorlaufleitung (19) verbindbarer Anschlußstutzen (27) und einen das Dämpfungselement (14) wenigstens teilweise umgreifenden Bund (31) aufweist.

9. Vorrichtung nach einem der vorhergehenden Ansprüche, dadurch gekennzeichnet, daß an einem der Haltevorrichtung (13) gegenüberliegenden Ende des Dämpfungselementes (14) eine Hülse (38) vorgesehen ist, die sich zumindest teilweise von einer der Haltevorrichtung (13) gegenüberliegenden Stirnseite (41) in Richtung auf die Haltevorrichtung (13) erstreckt.

## Claims

1. Device for mounting a fuel feed unit inside a fuel tank, in particular of motor vehicles, having at least one damping element (14) which substantially completely surrounds the fuel feed unit (12) and is arranged in the fuel tank by means of a holding device (13) which engages on the damping element (14),
characterized in that the damping element (14) is designed as a foamed body which surrounds at least the fuel feed unit (12) in a form-fitting manner.

2. Device according to Claim 1, characterized in that the damping element (14) is designed as an open-cell foamed body.

3. Device according to one of the preceding claims, characterized in that the damping element (14) is of two-part or multipart design and has cutouts in order to mount the fuel feed unit (12) and/or the electrical connection lines (17) and/or at least for a connection piece (18) of an inflow line (19) and/or a preliminary screen (16) of the fuel feed unit (12).

4. Device according to Claim 3, characterized in that the two-part or multipart damping element (14) has a parting plane (32) which runs axially with respect to a longitudinal axis of the fuel feed unit (12).

5. Device according to one of Claims 1 to 3, characterized in that the two-part or multipart damping element (14) has a parting plane (37) which runs radially with respect to a longitudinal axis of the fuel feed unit (12).

6. Device according to one of Claims 3 to 5, characterized in that the two-part or multipart damping element (14) has latching elements (36) which lie in the parting plane (32, 37).

7. Device according to one the preceding claims, characterized in that the holding device (13) is arranged on at least one end side (22) of the damping element (14), which is of substantially cylindrical design, and has at least one attachment element (24) for attaching it in the fuel tank.

8. Device according to one of the preceding claims, characterized in that the holding device (13) has at least one electrical connection point (26), a connection stop (27) which can be connected to the inflow line (19), and a collar (31) which at least partially engages around the damping element (14).

9. Device according to one of the preceding claims, characterized in that at an end of the damping element (14) which is opposite to the holding device (13) there is a sleeve (38) which extends at least in part from an end side (41) which is opposite to the holding device (13) towards the holding device (13).

## Revendications

1. Dispositif de montage d'un module d'alimentation en carburant dans un réservoir de carburant notamment de véhicule automobile comprenant un élément amortisseur (14) entourant pratiquement complètement au moins le module d'alimentation (12), cet élément étant monté dans le réservoir par un dispositif de fixation (13) agissant sur l'élément amortisseur (14),
caractérisé en ce que
l'élément amortisseur (14) est un corps en mousse entourant par une liaison par la forme au moins le module d'alimentation en carburant (12).

2. Dispositif selon la revendication 1,
caractérisé en ce que
l'élément amortisseur (14) est un corps en mousse à pores ouverts.

3. Dispositif selon l'une quelconque des revendications précédentes,
caractérisé en ce que
l'élément amortisseur (14) est réalisé en deux ou plusieurs parties et comporte des cavités pour recevoir le module d'alimentation en carburant (12) et/ou les câbles de liaison électriques (17) et/ou au moins un embout de liaison (18) d'une conduite d'alimentation (19) et/ou d'une crépine (16) du module d'alimentation (12).

4. Dispositif selon la revendication 3,
caractérisé en ce que
l'élément amortisseur (14) en deux ou plusieurs parties présente un plan de séparation (32) axial par rapport à l'axe longitudinal du module d'alimentation (12).

5. Dispositif selon l'une des revendications 1 à 3,
caractérisé en ce que
l'élément amortisseur (14) en deux ou plusieurs parties comporte un plan de séparation (37) radial par rapport à l'axe longitudinal du module (12).

6. Dispositif selon l'une des revendications 3 à 5,
caractérisé en ce que
l'élément amortisseur (14) en deux ou plusieurs parties présente des éléments d'accrochage (36) situés dans le plan de jonction (32, 37).

7. Dispositif selon l'une des revendications précédentes,
caractérisé en ce que
sur au moins une face frontale (22) de l'élément amortisseur (14) de forme essentiellement cylindrique, se trouve le dispositif de fixation (13) et comporte au moins un élément de fixation (24) pour être fixé dans le réservoir de carburant.

8. Dispositif selon l'une des revendications précédentes,
caractérisé en ce que
le dispositif de fixation (13) présente au moins un point de liaison électrique (26), un ajutage (27) susceptible d'être relié à la conduite d'alimentation (19) et un rebord (31) entourant au moins partiellement l'élément amortisseur (14).

9. Dispositif selon l'une des revendications précédentes,
caractérisé en ce qu'
à une extrémité de l'élément amortisseur (14) opposé au dispositif de fixation (13), il est prévu un manchon (38) qui s'étend au moins en partie en direction du dispositif de fixation (13) en partant d'une face frontale (41) opposée à celle du dispositif de fixation (13).
